# NEUE EUROPÄISCHE PATENTSCHRIFT

(11) **EP 2 528 737 B2**
(45) Veröffentlichungstag und Bekanntmachung des Hinweises auf die Entscheidung über den Einspruch: **11.01.2023**
(45) Hinweis auf die Patenterteilung: 25.06.2014
(21) Anmeldenummer: 11710414.1
(22) Anmeldetag: 26.01.2011
(51) Int. Cl.: B32B 27/08, B32B 27/32, C08J 5/18

(54) **MATTE POLYOLEFINFOLIE MIT RELEASE-EIGENSCHAFTEN**
MATT POLYOLEFIN FILM HAVING RELEASE PROPERTIES
FEUILLE DE POLYOLÉFINES MATTE PRÉSENTANT DES PROPRIÉTÉS DE PELABILITÉ

(30) Priorität: 29.01.2010 DE 102010006379
(43) Veröffentlichungstag der Anmeldung: 05.12.2012
(73) Patentinhaber: Treofan Germany GmbH & Co. KG, 66539 Neunkirchen (DE)
(72) Erfinder: HÜTT, Detlef, 66265 Heusweiler (DE)
(74) Vertreter: Mai Besier
(86) Internationale Anmeldenummer: PCT/EP2011/000335
(87) Internationale Veröffentlichungsnummer: WO 2011/092001

(56) Entgegenhaltungen:
- EP-A1- 0 563 796
- EP-A1- 0 563 796
- EP-A1- 1 518 887
- EP-A1- 1 518 887
- WO-A1-99/59818
- WO-A1-2004/089621

## Beschreibung

Die Erfindung betrifft eine matte Polyolefinfolie mit guten Release-Eigenschaften, insbesondere gegen Kaltsiegelkleber.

Lebensmittel und andere Packgüter werden häufig in Verpackungsfolien eingeschweißt, wobei zur Herstellung der Siegelnaht erhöhte Temperaturen, in der Regel über 100°C, angewendet werden müssen. Bei schnell laufenden Verpackungsmaschinen reicht die Zeit für einen Wärmeübertrag zum Verschweißen der Verpackung unter Umständen nicht mehr aus. Für derartige Anwendungsfälle werden in der Regel Kaltsiegelkleber eingesetzt, die in dünnen Schichten und nur im Bereich der Siegelnaht aufgetragen werden. Die Kaltsiegelkleber sind so eingestellt, daß sie bereits bei Zimmertemperatur und Druck verschweißt werden können.

Kaltsiegelkleber werden bevorzugt unmittelbar nach der Bedruckung der Folien aufgetragen. Die bedruckten und mit Kaltsiegelkleber beschichteten Folien bzw. Folienverbunde werden danach bis zum Gebrauch in Form von Rollen gelagert. Dabei muß ein Verkleben oder Verblocken der Außenseite des Verbundes mit dem Kaltsiegelkleber auf der Innenseite der Folie oder des Folienverbundes vermieden werden (Releasewirkung).

Die gewünschte Releasewirkung läßt sich auf verschiedenen Wegen erzielen. Zum Beispiel können sogenannte Release-Lacke aus Lack-Lösungen oder - Dispersionen aufgetragen werden, die unter Energieeinsatz getrocknet werden müssen. Es ist eine sorgfältige Kontrolle der Verarbeitungsbedingungen erforderlich, um die hohe optische Güte des Lackauftrags gewährleisten zu können.

Des weiteren können auch transparente, hoch glänzende Folien mit einer Basisfolie laminiert werden, die aufgrund ihrer Rezeptur und/oder Oberflächenstruktur nur eine geringe Blockneigung gegen den Kaltsiegelkleber aufweisen (Releasefolie). Hierbei wird das Erscheinungsbild der Verpackung durch den Glanz der aufgebrachten Folie bestimmt

Für verschiedene Anwendungszwecke wurden unterschiedliche Kaltsiegelkleber entwickelt, die sich nach Zusammensetzung und Eigenschaften zum Teil erheblich voneinander unterscheiden. Daher sind die Anforderungen an die Release-Lacke und Release-Folien sehr unterschiedlich. Je nach Anwendungsfall kann trotz Release-Lack oder Release-Folie ein erheblicher Kraftaufwand erforderlich sein, um die kaltsiegel-beschichteten Folien oder den Folienverbund abzurollen. In manchen Fällen kommt es dabei zur Delaminierung des Release Lacks, gegebenenfalls samt anhaftender Druckfarbe. Dies führt zu Störungen in der Funktion des Kaltsiegelklebers durch partielle Überdeckung des Klebers durch die übertragenen Farb- und Lackschichten sowie zu entsprechenden Fehlstellen im Druckbild. Dabei können die Lagerbedingungen (Temperatur, Luftfeuchte) die Verblockung beeinflussen. In anderen Fällen kann es zur Übertragung des Kaltsiegelklebers auf die Außenseite kommen. Dies geschieht dann, wenn die Adhäsionskräfte zwischen dem Kaltsiegelkleber und der gegenüberliegenden Oberfläche stärker sind als die Haftung des Kaltsiegelklebers auf der Folienoberfläche oder die Haftung des Relaselackes bzw. der Druckfarbe gegenüber der Folie.

Im Stand der Technik sind Release-Folien bekannt. Bevorzugt werden biaxial orientierte Polypropylenfolien (BOPP-Folien) für diesen Zweck eingesetzt, deren Deckschichten aus PP-Homopolymeren bestehen und geringe Anteile an Polysiloxanen enthalten. Diese Folien können jedoch nur in Verbindung mit ausgewählten Kaltsiegelklebern verwendet werden. Manchmal ist die Release Wirkung nicht ausreichend. In anderen Fällen beeinträchtigt ein Übertrag des Polysiloxans von der äußeren Oberfläche des Verbundes auf die Oberfläche der Kaltsiegelkleberschicht die Haftung des Klebers (cold seal deadening).

Des weiteren sind im Stand der Technik matte Folien bekannt. Diese Folien werden bevorzugt für Verpackungen eingesetzt, die einen papier-ähnlichen Charakter aufweisen sollen, z.B. bei Bio-Produkten. Eine matte Optik kann durch verschiedene Techniken erzielt werden, beispielsweise durch einen hohen Füllstoffgehalt in der Deckschicht oder durch Prägungen, die die Oberfläche der Folie mechanische aufrauhen. Es gibt Beschichtungen, die nach der Herstellung der Folie aufgetragen werden. Es ist auch bekannt, daß Deckschichten aus inkompatiblen Polymeren eine matte Optik erzeugen.

Im Rahmen der vorliegenden Erfindung wurde gefunden, daß matte Folien eine besonders starke Neigung zum Verblocken gegen einen Kaltsiegelkleber aufweisen. Dies hängt wahrscheinlich mit der rauhen Oberflächenstruktur der matten Schicht zusammen. Der Kaltsiegelkleber drückt sich in die Unebenheiten dieser Struktur und bildet so eine besonders gute Haftung auf dieser Oberfläche. Aus diesen Gründen werden häufig opake Folien mit Vakuolen als Basisfolie verwendet und auf der Oberfläche mit Kaltsiegelkleber beschichtet. Opake Folien haben durch eine vakuolenhaltige Basisschicht eine inhärente Rauhigkeit, die die Verankerung des Kaltsiegelklebers verbessert. Aus diesen Gründen sind Folien mit einer matten Oberfläche als Releasefolie nicht geeignet. Damit sind die optischen Gestaltungsmöglichkeiten bei der Verwendung von Kaltsiegelklebern zum Verpacken sehr beschränkt. Es besteht dennoch ein Bedürfnis nach Verpackungen mit einer matten Optik, die gleichzeitig in Verbindung mit einem Kaltsiegelkleber verwendet werden können.

Der vorliegenden Erfindung liegt daher die Aufgabe zu Grunde, eine transparente Polyolefinfolie mit matter Optik zur Verfügung zu stellen, deren matte Oberfläche (erste Oberfläche) gegenüber Kaltsiegelbeschichtungen eine gute Releasewirkung aufweisen soll. Diese Releasewirkung soll gegenüber einer breiten Palette von Kaltsiegelklebern gegeben sein. Zusätzlich soll die Folie auf der, der Matt-Schicht gegenüberliegenden (zweiten) Oberfläche, eine gute Haftung gegenüber Druckfarben oder Kaschierklebern aufweisen, damit die Releasefolie mit ihrer zweiten Oberfläche gegen eine bedruckte oder unbedruckte Basisfolie zuverlässig laminiert werden kann. Eine Rolle des Kaltsiegel-beschichteten Folienverbundes muß mit niedrigen Kräften und ohne Störung abgerollt werden können. Der Kaltsiegelkleber darf in seiner Haftkraft durch Zusätze in der Release-Folie nicht beeinträchtigt werden.

Diese Aufgabe wird gelöst durch eine transparente, mehrschichtige, biaxial orientierte Polyolefinfolie gemäß Patentanspruch 1.

Des weiteren wird diese Aufgabe gelöst durch ein Laminat aus einer polyolefinischen Basisfolie, welche mittels Kaschierkleber oder mittels Extrusionslaminierung gegen eine Folie nach Anspruch 1 laminiert ist, wobei die Basisfolie mit ihrer inneren Oberfläche gegen die innere Oberfläche der Folie nach Anspruch 1 laminiert ist und auf die äußere Oberfläche der Basisfolie einen Kaltsiegelkleber aufgebracht ist.

Des weiteren wird diese Aufgabe gelöst durch eine Folie nach Anspruch 1, die auf der inneren Oberfläche bedruckt und mit einem Kaltsiegelkleber versehen ist.

Die Unteransprüche geben bevorzugte Ausführungsformen der Erfindung an.

Nachfolgend wird als innere Oberfläche oder innere Deckschicht diejenige Oberfläche oder Schicht der Releasefolie bezeichnet, welche gegebenenfalls bedruckt und/oder gegen die Basisfolie laminiert wird und/oder mit Kaltsiegelkleber beschichtet wird. Üblicherweise ist bei Verpackungsanwendungen diese Seite dem Packgut zugewandt und wird auch deshalb als Innenseite bezeichnet. Die äußere Oberfläche oder äußere Schicht ist entsprechend die gegenüberliegende Deckschicht der Releasefolie, deren Oberfläche nach dem Aufrollen des Laminats oder der Folie mit dem Kaltsiegelkleber in Kontakt steht.

Im Rahmen der vorliegenden Erfindung wurde gefunden, daß eine Polyolefinfolie mit einer matten äußeren Deckschicht sehr gute Release Eigenschaften gegenüber Kaltsiegelklebern aufweist, wenn diese Deckschicht ein ausgewähltes Polydialkylsiloxan mit einer Viskosität im Bereich von 150.000 bis 400.000 mm² /s enthält und auf der Oberfläche dieser äußeren Deckschicht einer Corona-Behandlung unterworfen wurde. Ein Laminat aus einer mit Kaltsiegelkleber beschichteten Basisfolie und der erfindungsgemäßen Releasefolie läßt sich nach Lagerung in Rollenform hervorragend abwickeln, ohne daß es zu einer Beschädigung des vorher aufgebrachten Kaltsiegelklebers oder zu Verdehnungen der Folie kommt. Überraschenderweise zeigt sich auch keine Beeinträchtigung der Haftung des Kaltsiegelklebers nach dem Abwickeln des Laminats, obwohl dies bei der Verwendung von Siloxanen in der Releasefolie beobachtet wird. Die matte Deckschicht der Releasefolie muß erfindungsgemäß Polydialkylsiloxan mit einer Viskosität im Bereich von 150.000 bis400.000 mm² /s enthalten und zusätzlich mit Corona oberflächenbehandelt werden, um die gewünschte Releasewirkung gegenüber der Kaltsiegelkleberschicht sicherzustellen.

Überraschenderweise verbessert die Coronabehandlung die Release-eigenschaften der matten Oberfläche. Nach dem Stand der Technik werden Oberflächenbehandlungen von Polyolefinfolien durchgeführt, um die Hafteigenschaften im allgemeinen zu verbessern, insbesondere um die Bedruckbarkeit der Folienoberfläche zu gewährleisten. Somit war zu erwarten, daß eine Coronabehandlung die Haftung der matten Oberfläche auch gegenüber dem Kaltsiegelkleber erhöht.

Matte Folien haben grundsätzlich eine stärkere Neigung zum Verblocken mit Kaltsiegelkebern als Glanzfolien mit einer weniger rauhen Oberfläche. Dies wird auf die höhere Rauheit der matten Oberfläche zurückgeführt. Es ist darüber hinaus bekannt, daß sich die Oberflächenrauheit durch eine Plasma-, Corona- oder Flamm-Behandlung deutlich erhöht. Es war daher zu erwarten, daß die Coronabehandlung der matten Deckschicht die Oberflächenrauheit weiter erhöht und sich auch dadurch negativ auf die Release-Eigenschaften der behandelten Oberfläche auswirkt.

Obwohl eine Corona-Behandlung die Oberflächenrauheit erhöht und die Haftung verbessert, zeigt sich bei der erfindungsgemäßen Folie überraschenderweise kein erhöhtes Verblocken der matten behandelten Oberfläche gegenüber dem Kaltsiegelkleber, sondern vielmehr ein verbessertes Releaseverhalten.

Es wurde überraschenderweise gefunden, daß die erfindungsgemäße Folie mit dem ausgewählten Polydialkylsiloxan in der matten Deckschicht nicht nur trotz, sondern sogar durch Coronbehandlung sehr gute Release-Eigenschaften aufweist.

Es wurde des weiteren gefunden, daß das Polydialkylsiloxan weder die Verarbeitung der Releasefolie zum Laminat behindert, noch die Bedruckbarkeit der inneren Oberfläche der Releasefolie und auch nicht die Haftung des Kaltsiegelklebers beeinträchtigt. Es im Stand der Technik bekannt ist, daß Polysiloxane bei Kontakt mit einer gegenüberliegenden Oberfläche auf diese übertragen werden. Dieses Phänomen wird auch als Abklatsch-Effekt beschrieben. Es war daher zu erwarten, daß die Polysiloxane beim Aufwickeln der Releasefolie unmittelbar nach ihrer Herstellung auf die gegenüberliegende innere Oberfläche übertragen werden und dadurch die Hafteigenschaften dieser inneren Oberfläche gegenüber Druckfarben oder bei Laminierung beeinträchtigen oder nach Beschichtung mit dem Kaltsiegelkleber die Haftkraft des Kaltsiegelklebers vermindern würden. Dies ist jedoch bei den erfindungsgemäßen Folien nicht der Fall.

Es wurde gefunden, daß die erfindungsgemäße Folie diese zu erwartenden Nachteile nicht aufweist. Die Folie zeigt nach der Oberflächen-Behandlung der matten Deckschicht, welche das ausgewählten Siloxan mit einer Viskosität von 150.000 bis 400.000 mm²/s enthält, eine sehr gute Release Wirkung. Die Folie kann auf der gegenüberliegende inneren Oberfläche sehr gut bedruckt und/oder gegen eine Basisfolie zu einem Verbund lamininiert werden. Der mit Kaltsiegelkleber beschichtete Verbund kann als Rolle gelagert und anschließend ohne Probleme abgewickelt werden. Der Kaltsiegelkleber zeigt keine Beeinträchtigung der Haftkraft. Auch Ausführungsformen bei denen der Kaltsiegelkleber direkt auch die innere Oberfläche der erfindungsgemäßen Folie aufgetragen wird, zeigen einen guten Release gegenüber der Kleberschicht, aber es wird keine Beeinträchtigung der Haftkraft des Kaltsiegelklebers durch das Polydialkylsiloxan festgestellt.

In einer bevorzugten Ausführungsform ist die Releasefolie eine dreischichtige Folie, welche auf einer Oberfläche der Basisschicht eine bedruckbare innere Deckschicht und auf der gegenüberliegenden Oberfläche die erfindungsgemäße matte äußere Deckschicht aufweist, die Polydialkylsiloxan enthält. Die Oberflächenbehandlung der matten Deckschicht erfolgt mittels Corona. Gegebenenfalls kann zur Verbesserung der Hafteigenschaften auch die Oberfläche der zweiten inneren Deckschicht behandelt werden. Die Oberflächenbehandlung der inneren Deckschicht kann mittels Corona, Flamme oder Plasma erfolgen. Diese behandelte innere Oberfläche kann vor der Laminierung mit der Basisfolie gegebenenfalls mit einem Konterdruck versehen werden. Es ist jedoch auch möglich den Druck auf der inneren Oberfläche Basisfolie aufzubringen und die, gegebenenfalls vorbehandelte, innere Oberfläche der Releasefolie unbedruckt zu belassen. In jedem Fall wird die Basisfolie gegen diese innere Deckschicht der Releasefolie, beispielsweise mittels geeigneter Kaschierkleber, laminiert. Die Haftung des Kaschierklebers und die Verbundhaftung des Laminats wird durch die Oberflächenbehandlung der inneren Deckschicht verbessert. Das so hergestellte Laminat wird auf der äußeren Oberfläche der Basisfolie mit dem Kaltsiegelkleber beschichtet und aufgewickelt, so daß sich die matte Oberfläche der Releasefolie und die Oberfläche mit dem Kaltsiegelkleber der Basisfolie in Kontakt befinden. Dieses Material wird an den Packmachinen zur Verfügung gestellt, abgewickelt und zum Verpacken von Produkten, z.B. Lebensmitteln verwendet.

In einer weiteren Ausführungsform kann die Releasefolie nach der Bedruckung auf der inneren Oberfläche direkt auf dieser inneren Seite mit einem Kaltsiegelkleber beschichtet und aufgewickelt werden. In diese Fällen befindet sich die matte äußere Oberfläche mit der bedruckten und mit Kaltsiegelkleber versehenen inneren Oberfläche in Kontakt. Auch diese Rollen lassen sich problemlos verarbeiten.

Die Releasefolie zeigt auch vor der weiteren Verarbeitung ein sehr gutes Verarbeitungs- bzw. Laufverhalten, überraschender Weise auch bei beidseitig behandelten Ausführungsformen. Im allgemeinen ist die Verarbeitung von beidseitig oberflächen-behandelten Folien schwierig, da in dieser Ausführungsform zwei Oberflächen mit verbesserter Haftung in dem Folien-Wickel aufeinander liegen.

In einer weiteren Ausführungsform der Erfindung weist die Releasefolie zwischen der Basisschicht und der Deckschicht zusätzlich eine Zwischenschicht auf, d.h. mögliche Ausführungsformen der Releasefolie sind mindestens dreischichtig, vorzugsweise vierschichtig, gegebenfalls auch fünfschichtig aufgebaut.

Diese Schichten, die zwischen der Basisschicht und der jeweiligen Deckschicht liegen, werden nachfolgend als Zwischenschichten bezeichnet. Eine äußere Zwischenschicht ist zwischen der äußeren Deckschicht und der Basisschicht angebracht ist. Entsprechend ist gegenüberliegend eine innere Zwischenschicht zwischen der inneren Deckschicht und der Basisschicht vorhanden.

Es ist erfindungswesentlich, daß die Releasefolie in der matten äußeren Deckschicht Polydialkylsiloxan mit einer Viskosität von 150.000 bis 400.000 mm²/s enthält. Die Polydialkylsiloxan-Menge in der Deckschicht liegt im allgemeinen in einem Bereich von 0,5 bis 5 Gew.-%, vorzugsweise 0,5 - 3 Gew.-%, bezogen auf das Gewicht der Deckschicht. Die übrigen Schichten, insbesondere die zweite innere Deckschicht, enthalten/enthält kein Polydialkylsiloxan.

Polydialkylsiloxane sind Polymere bei denen unverzweigte Ketten wechselweise aus aufeinanderfolgenden Silizium und Sauerstoffatomen aufgebaut sind und an den Siliziumatomen je zwei Alkylgruppen aufweisen. Die endständigen Siliziumatome der Ketten weisen drei Alkylgruppen auf. Alkylgruppen sind beispielsweise Alkylgruppen mit 1 bis 5 C-Atomen, wobei Methylgruppen, d.h. Polydimethylsiloxane, bevorzugt sind. Polydialkylsiloxane weisen dementsprechend keine weiteren funktionellen Gruppen auf. Erfindungsgemäß werden Polydialkylsiloxane eingesetzt deren Viskosität 150.000 bis 400.000 mm²/s, insbesondere 250.000 bis 350.000 mm²/s beträgt. Die Viskosität hängt mit der Kettenlänge und dem Molekulargewicht der Siloxane zusammen. Beispielsweise haben Siloxane mit einer Viskosität von mindesten 100.000 mm²/s im allgemeinen ein Molekulargewicht von mindesten 100.000 und eine Kettenlänge von über 14000 Siloxaneinheiten.

Die Basisschicht, sowie gegebenenfalls vorhandene Zwischenschichten, der verschiedenen vorstehend beschriebenen Ausführungsformen der Releasefolie ist/sind im allgemeinen aus einem Polyolefin, vorzugsweise aus Propylenpolymeren aufgebaut. Die Basisschicht und/oder die jeweilige Zwischenschicht enthält im allgemeinen mindestens 70 - 100 Gew.-%, vorzugsweise 70 bis <100 Gew.-%, insbesondere 80 bis 99,4 Gew.%, jeweils bezogen auf die Basisschicht bzw. die Zwischenschicht, eines Propylenpolymeren.

Im allgemeinen enthält das Propylenpolymer mindestens 90 Gew.-%, vorzugsweise 94 bis 100 Gew.-%, insbesondere 98 bis 100 Gew.-%, Propylen. Der entsprechende Comonomergehalt von höchstens 10 Gew.-% bzw. 0 bis 6 Gew.-% bzw. 0 bis 2 Gew.-% besteht, wenn vorhanden, im allgemeinen aus Ethylen. Die Angaben in Gew.-% beziehen sich jeweils auf das Propylenpolymere. Bevorzugt sind isotaktische Propylenhomopolymere mit einem Schmelzpunkt von 140 bis 170 °C, vorzugsweise von 155 bis 165 °C, und einen Schmelzflußindex (Messung DIN EN ISO 1133 bei 2,16°kg Belastung und 230°C) von 1,0 bis 10 g/10 min, vorzugsweise von 1,5 bis 6,5 g/10 min. Der n-heptanlösliche Anteil des Polymeren beträgt im allgemeinen 1 bis 10 Gew.-%, vorzugsweise 2 bis 5 Gew.-% bezogen auf das Ausgangspolymere. In einer weiteren Ausführungsform können hochisotaktische Polypropylenpolymere eingesetzt werden, deren ¹³C-NMR Kettenisotaxie >95%, vorzugsweise 96 - 98,5% beträgt.

Zusätzlich kann die Basisschicht und/oder die jeweilige Zwischenschicht übliche Additive wie Neutralisationsmittel, Stabilisatoren, Antistatika und/oder Gleitmittel in jeweils wirksamen Mengen enthalten. Die Basisschicht ist transparent und enthält daher keine opazifizierenden Additive, wie Pigmente oder vakuoleninitierende Teilchen.

Bevorzugte Antistatika sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit Hydroxy-(C₁-C₄)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,5 Gew.-%.

Gleitmittel sind höhere aliphatische Säureamide, höhere aliphatische Säureester, insbesondere mono-Glycerylester, und Metallseifen. Die wirksame Menge an Gleitmittel liegt im Bereich von 0,01 bis 3 Gew.%, vorzugsweise 0,02 bis 1 Gew.-%. Besonders geeignet ist der Zusatz von höheren aliphatischen Säureamiden im Bereich von 0,01 bis 0,25 Gew.-% in der Basisschicht, insbesondere Erucasäureamid und Stearylamid.

Als Stabilisatoren können die üblichen stabilisierend wirkenden Verbindungen für Ethylen-, Propylen- und andere Olefinpolymere eingesetzt werden. Deren Zusatzmenge liegt zwischen 0,05 und 2 Gew.-%. Besonders geeignet sind phenolische und phosphitische Stabilisatoren. Phenolische Stabilisatoren mit einer Molmasse von mehr als 500 g/mol werden bevorzugt, insbesondere Pentaerythrityl-Tetrakis-3-(3,5-di-Tertiärbutyl-4-Hydroxy-phenyl)-Propionat oder 1,3,5-Trimethyl-2,4,6-tris(3,5-di-Tertiärbutyl-4-Hydroxybenzyl)benzol.

Als phosphitische Stabilisatoren kommen Ultranox 626, Irgafos 168 und Weston 619 in Betracht, bevorzugt wird Irgafos 168. Dabei werden phenolische Stabilisatoren allein in einer Menge von 0,1 bis 0,6 Gew.-%, insbesondere 0,1 bis 0,3 Gew.-%, phenolische und phosphitische Stabilisatoren im Verhältnis 1:4 bis 2:1 und in einer Gesamtmenge von 0,1 bis 0,4 Gew.-%, insbesondere 0,1 bis 0,25 Gew.-%, eingesetzt.

Neutralisationsmittel sind vorzugsweise Dihydrotalcit, Calciumstearat und/oder Calciumcarbonat einer mittleren Teilchengröße von höchstens 0,7 µm, einer maximalen Teilchengröße von kleiner 10 µm und einer spezifischen Oberfläche von mindestens 40 m²/g.

Die vorstehenden Angaben in Gew.-% beziehen sich auf das Gewicht der Basisschicht bzw. auf das Gewicht der jeweiligen Zwischenschicht.

Die matte äußere Deckschicht der Releasefolie enthält als erfindungswesentliche Bestandteile mindestens zwei inkompatible Polymere (A) und (B). Inkompatibel bedeutet im Sinne der vorliegenden Erfindung, daß die zwei Polymeren zwei getrennte Phasen bilden und dadurch eine erhöhte Rauheit der Oberfläche erzeugen. Im allgemeinen ist die Deckschicht aus (A) Propylenhomopolymer, Co- und/oder Terpolymer aus Propylen mit Ethylen und/oder Butylen-Einheiten und (B) Polyethylen aufgebaut. Im allgemeinen enthält die matte Deckschicht mindestens 10 bis 80 Gew.-%, vorzugsweise 20 bis 65 Gew.-%, insbesondere 30 bis 50 Gew.-% des Polyethylens und 20 bis 90 Gew.-%, vorzugsweise 35 bis 80 Gew.-%, insbesondere 50 bis 70 Gew.-% des Propylen-Homo-, Co- und/oder Terpolymeren, bezogen auf das Gewicht der Deckschicht. Gegebenenfalls kann diese Deckschicht zusätzlich zu dem genannten inkompatiblen Polymeren und dem erfindungswesentlichen Polydialkylsiloxan übliche Additive sowie weitere Polymere in jeweils wirksamen Mengen enthalten, soweit sie die erfindungswesentlichen Eigenschaften der Folie nicht beeinträchtigen.

Geeignete Co- oder Terpolymere sind aus Propylen mit Ethylen und/oder Butylen-Einheiten aufgebaut, wobei Terpolymere drei verschiedene Monomere enthalten. Die Zusammensetzung der Co- oder Terpolymeren aus den jeweiligen Monomeren kann innerhalb der nachstehend beschriebenen Grenzen variieren. Im allgemeinen enthalten die Co- und/oder Terpolymeren über 50 Gew.-% Propylen-Einheiten, d.h es sind Propylenco- und/oder Propylenterpolymere mit Ethylen- und/oder Butylen-Einheiten als Comonomere. Copolymere enthalten im allgemeinen mindestens 60 - 99 Gew.-%, vorzugsweise 65 bis 97 Gew.-% Propylen und höchstens 1 - 40 Gew.%, vorzugsweise 3 bis 35 Gew.% Ethylen oder Butylen als Comonomer. Terpolymere enthalten im allgemeinen 65 bis 96 Gew.-%, vorzugsweise 72 bis 93 Gew.-% Propylen, und 3 bis 34 Gew.-%, vorzugsweise 5 bis 26 Gew.-% Ethylen und 1 bis 10 Gew.-%, vorzugsweise 2 bis 8 Gew.-% Butylen. Der Schmelzindex der Co- und/oder Terpolymeren beträgt im allgemeinen 0,1 bis 20 g/10min (230°C, 2,16 kg), vorzugsweise 0,1 bis 15 g/10min. Der Schmelzpunkt kann in einem Bereich von 70 bis 150°C liegen, vorzugsweise 100 bis 140°C.

Gegebenenfalls können die vorstehend genannten Co- und Terpolymeren untereinander gemischt werden. Hierbei können die Anteile von Co- zu Terpolymer in beliebigen Grenzen variieren. Diese Mischung wird dann in den vorstehend, für die jeweiligen Co- und Terpolymeren beschriebenen Mengen, in der matten Deckschicht eingesetzt.

In einer weiteren Ausführungsform kann statt oder zusätzlich zu den genannten Co- und/oder Terpolymeren auch Propylenhomopolymer verwendet werden. Die Homopolymeren werden in den für die Co- und Terpolymeren beschriebenen Mengen eingesetzt. Geeignete Propylenhomopolymere sind solche, die vorstehend im Einzelnen als Propylenhomopolymer der Basisschicht beschrieben werden. Gegebenenfalls können die Homopolymeren auch mit den Co- und/oder Terpolymer gemischt werden. Der Anteil an Co- und/oder Terpolymer wird dann entsprechend um den Anteil an Homopolymer reduziert.

Die Anteile an Co- und/oder Terpolymer und/oder Propylen-Homopolymer und Polyethylen in der matten Deckschicht sollten aus den genannten MengenBereichen so gewählt werden, daß die Oberflächenrauheit Rz der Deckschicht mindestens 2,5µm beträgt, vorzugsweise 3 bis 15µm, insbesondere 3 bis 8µm (cut-off bei 25µm). Gegebenenfalls kann die Rauheit zusätzlich durch Auswahl der Schichtdicke und/oder durch den Zusatz von Antiblockmittel so beeinflußt werden, daß dieser Rz-Wert erfüllt wird. Im allgemeinen ist die matte Deckschicht jedoch im wesentlichen frei von partikelförmigen Füllstoffen, d.h. im allgemeinen liegt deren Menge unter 5 Gew.-%, vorzugsweise unter 2 Gew.-%, um Nachteile wie Auskreiden oder Beeinträchtigung der Transparenz zu vermeiden. Diese Empfehlung steht der zusätzlichen Einarbeitung von Antiblockmitteln, die im allgemeinen in einer Menge von unter 2 Gew.-% eingesetzt werden, nicht entgegen.

Die zweite erfindungswesentliche Komponente der matten Deckschicht ist ein Polyethylen, welches mit den vorstehend beschriebenen Co- und/oder Terpolymeren und/oder Propylenhomopolymeren, unverträglich ist. Unverträglich bedeutet in diesem Zusammenhang, daß durch die Mischung der Propylenhomopolymeren, Co- und/oder Terpolymeren mit dem Polyethylen eine Oberflächenrauheit gebildet wird. Diese Rauheit entsteht durch die zwei separaten Phasen, die die nicht mischbaren Polymeren bilden. Geeignete Polyethylene sind beispielsweise HDPE oder MDPE. Das HDPE weißt im allgemeinen die nachstehend beschriebenen Eigenschaften auf, beispielsweise einen MFI (21,6 kg/190 C) von größer 0,1 bis 50 g/10 min, vorzugsweise 0,6 bis 20 g/10min, gemessen nach DIN EN ISO 1133 und eine Viskositätszahl, gemessen nach DIN 53 728, Teil 4, oder ISO 1191, im Bereich von 100 bis 450 cm³/g, vorzugsweise 120 bis 280 cm³/g. Die Kristallinität beträgt im allgemeinen 35 bis 80 %, vorzugsweise 50 bis 80 %. Die Dichte, gemessen bei 23 °C nach DIN 53 479, Verfahren A, oder ISO 1183, liegt im Bereich von >0,94 bis 0,96 g/cm³. Der Schmelzpunkt, gemessen mit DSC (Maximum der Schmelzkurve, Aufheizgeschwindigkeit 20 °C/min), liegt zwischen 120 und 140°C. Geeignetes MDPE hat im allgemeinen einen MFI (21,6 kg/190 C) von größer 0,1 bis 50 g/10 min, vorzugsweise 0,6 bis 20 g/10min, gemessen nach DIN EN ISO 1133. Die Dichte, gemessen bei 23 °C nach DIN 53 479, Verfahren A, oder ISO 1183, liegt im Bereich von >0,925 bis 0,94 g/cm³. Der Schmelzpunkt, gemessen mit DSC (Maximum der Schmelzkurve, Aufheizgeschwindigkeit 20 °C/min), liegt zwischen 115 und 135°C.

Gegebenenfalls kann die matte Deckschicht weitere olefinische Polymere in geringen Mengen, beispielsweise unter 10 Gew.-%, vorzugsweise unter 5 Gew.-% enthalten, soweit dadurch nicht die Funktionalität, insbesondere die Oberflächenrauheit oder die Release-Eigenschaften gestört werden. Hier kommen beispielsweise auch Polyolefine in Frage, die über Additiv-Batche in die jeweilige Deckschicht eingearbeitet werden.

Für die matte Deckschicht werden bevorzugt Propylen-Ethylen-Copolymere in Abmischung mit MDPE oder HDPE eingesetzt. Vorzugsweise beträgt der Ethylengehalt der Copolymeren 2 bis 10 Gew.-% und der Schmelzpunkt liegt in einem Bereich von 120-135°C.

Die Oberflächenrauheit Rz der matten Deckschicht liegt im allgemeinen in einem Bereich von 2,5 - 6µm, vorzugsweise 3 - 5µm bei einem Cut-off von 0,25µm.

Die Zusammensetzung der zweiten inneren Deckschicht, welche in drei- und mehrschichtigen Ausführungsformen im allgemeinen vorhanden ist, kann unabhängig von der erfindungswesentlichen, oberflächenbehandelten matten Deckschicht gewählt werden. Die zweite Deckschicht kann somit den gleichen oder einen davon verschiedenen Aufbau haben. Somit kann als innere Deckschicht auch eine zweite matte Schicht der vorstehend beschriebenen Zusammensetzung aufgebracht werden.

Im allgemeinen enthält die zweite Deckschicht mindestens 80 bis 100 Gew.-%, vorzugsweise 95 bis <100 Gew.-%, insbesondere 98 bis <100 Gew.-% eines Homo-, Co- und/oder Terpolymeren, bezogen auf das Gewicht der zweiten inneren Deckschicht, sowie gegebenenfalls zusätzlich übliche Additive in jeweils wirksamen Mengen. Der Anteil an Polymeren reduziert sich entsprechend geringfügig bei Zumischung derartiger Additive.

Geeignete Co- oder Terpolymere sind aus Ethylen, Propylen oder Butylen-Einheiten aufgebaut, wobei Terpolymere drei verschiedene Monomere enthalten. Die Zusammensetzung der Co- oder Terpolymeren aus den jeweiligen Monomeren kann innerhalb der nachstehend beschriebenen Grenzen variieren. Im allgemeinen enthalten die Co- und/oder Terpolymeren über 50 Gew.-% Propylen-Einheiten, d.h es sind Propylenco- und/oder Propylenterpolymere mit Ethylen- und/oder Butylen-Einheiten als Comonomere. Copolymere enthalten im allgemeinen mindestens 60 - 99 Gew.-%, vorzugsweise 65 bis 97 Gew.-% Propylen und höchstens 1 - 40 Gew.-%, vorzugsweise 3 bis 35 Gew.-% Ethylen oder Butylen als Comonomer. Terpolymere enthalten im allgemeinen 65 bis 96 Gew.-%, vorzugsweise 72 bis 93 Gew.-% Propylen, und 3 bis 34 Gew.-%, vorzugsweise 5 bis 26 Gew.-% Ethylen und 1 bis 10 Gew.-%, vorzugsweise 2 bis 8 Gew.-% Butylen. Der Schmelzindex der Co- und/oder Terpolymeren beträgt im allgemeinen 0,1 bis 20 g/10min (230°C, 2,16 kg), vorzugsweise 0,1 bis 15 g/10min. Der Schmelzpunkt kann in einem Bereich von 70 bis 150°C liegen, vorzugsweise 100 bis 140°C.

Gegebenenfalls können die vorstehend genannten Co- und Terpolymeren untereinander gemischt werden. Hierbei können die Anteile von Co- zu Terpolymer in beliebigen Grenzen variieren. Diese Mischung wird dann in den vorstehend, für die jeweiligen Co- und Terpolymeren beschriebenen Mengen, in der zweiten Deckschicht eingesetzt.

In einer weiteren Ausführungsform kann statt oder zusätzlich zu den genannten Co- und/oder Terpolymeren auch Propylenhomopolymer verwendet werden. Die Homopolymeren werden in den für die Co- und Terpolymeren beschriebenen Mengen eingesetzt. Geeignete Propylenhomopolymere sind solche, die nachstehend im Einzelnen als Propylenhomopolymer der Basisschicht beschrieben werden. Gegebenenfalls können die Homopolymeren auch mit den Co- und/oder Terpolymer gemischt werden. Der Anteil an Co- und/oder Terpolymer wird dann entsprechend um den Anteil an Homopolymer reduziert.

Im Hinblick auf eine gute und langzeitstabile Bedruckbarkeit sind die beschriebenen Propylencopolymeren und/oder Propylenterpolymeren jedoch bevorzugt.

Gegebenenfalls können sowohl der matten äußeren Deckschicht als auch der inneren Deckschicht die vorstehend für die Basisschicht beschrieben Additive wie Antistatika, Neutralisationsmittel, Gleitmittel und/oder Stabilisatoren, sowie gegebenenfalls zusätzlich Antiblockmittel zugesetzt werden. Die Angaben in Gew.- % beziehen sich dann entsprechend auf das Gewicht der Deckschicht.

Geeignete Antiblockmittel sind anorganische Zusatzstoffe wie Siliziumdioxid, Calciumcarbonat, Magnesitimsilicat, Aluminiumsilicat, Calciumphosphat und dergleichen und/oder unverträgliche organische Polymerisate wie vernetzte Silikone, Polymethylmethacrylate (PMMA), Polyamide, Polyester, Polycarbonate und dergleichen, bevorzugt werden Siliciumdioxid und vernetzte Silikone und PMMA. Die wirksame Menge an Antiblockmittel liegt im Bereich von 0,1 bis 2 Gew.-%, vorzugsweise 0,1 bis 0,8 Gew.-%. Die mittlere Teilchengröße liegt zwischen 1 und 6 µm, insbesondere 2 und 5 µm. Insbesondere ist es bevorzugt in der matten Deckschicht zusätzlich 0,1 bis 0,5 Gew.% vernetztes Silkon als Antiblockmittel oder PMMA Partikel, vorzugsweise vernetzte PMMA Partikel, einzusetzen.

Die zweite Deckschicht sollte im allgemeinen keine Zusatzstoffe enthalten, welche die Bedruckbarkeit oder die Hafteigenschaften in der inneren Oberfläche negativ beeinflußen oder die Mengen solcher Additive sind so gering zu halten, daß solche nachteiligen Wirkungen vermieden werden.

Die erfindungsgemäße Releasefolie umfaßt die vorstehend beschriebenen Schichten. Unter der Basisschicht wird dabei im Sinne der vorliegenden Erfindung diejenige Schicht verstanden, welche die größte Schichtdicke aufweist und im allgemeinen mindestens 40% der Gesamtdicke ausmacht. Deckschichten sind die außenliegenden Schichten. Die Schichtdicke der matten Deckschicht beträgt im allgemeinen 1 bis 10µm, vorzugsweise 1,5 bis 8 µm, insbesondere 2 bis 4 µm. Eine erhöhte Deckschichtdicke von mindestens 2,5µm trägt vorteilhaft zur Erhöhung der Rauheit bei. Die Dicke der optionalen zweiten Deckschichten kann, aber muß nicht identisch sein. Deren Dicke liegt im allgemeinen in einem Bereich von 0,3 bis 3 µm, insbesondere 0,4 bis 1,5 µm. Die Zwischenschicht/en sind naturgemäß zwischen der Basisschicht und der Deckschicht angebracht. Die Zwischenschichten sind im allgemeinen zwischen 0,5 und 15µm dick, vorzugsweise 1,0 bis 10µm.

Die Gesamtdicke der erfindungsgemäßen Releasefolie kann innerhalb weiter Grenzen variieren und richtet sich nach dem beabsichtigten Einsatz. Sie beträgt vorzugsweise 4 bis 60 µm, insbesondere 5 bis 40 µm, insbesondere 6 bis 30 µm, wobei die Basisschicht vorzugsweise 60 bis 99 % der Gesamtdicke der erfindungsgemäßen Releasefolie ausmacht.

Die Erfindung betrifft weiterhin ein Verfahren zur Herstellung der erfindungsgemäßen Releasefolie nach dem an sich bekannten Coextrusionsverfahren.

Im Rahmen dieses Verfahrens wird so vorgegangen, daß die Materialien für die einzelnen Schichten der Folie mit Hilfe von zwei bis vier oder mehr Extrudern aufgeschmolzen und die entsprechenden Schmelzen gemeinsam durch eine Flachdüse coextrudiert werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht corona-, plasma- oder flammbehandelt wird, wobei in diesem erfindungsgemäßen Verfahren wenigstens die matte äußere Oberfläche mittels Corona behandelt wird.

Die biaxiale Streckung (Orientierung) in Längs- bzw. Querrichtung wird simultan oder aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist].

Zunächst wird wie beim Coextrusionsverfahren üblich das Polymere bzw. die Polymermischung der einzelnen Schichten in jeweils einem Extruder komprimiert und verflüssigt, wobei die gegebenenfalls zugesetzten Additive bereits im Polymer bzw. in der Polymermischung enthalten sein können. Die Schmelzen werden dann aufeinander gelegt und gleichzeitig durch eine Flachdüse (Breitschlitzdüse) gepreßt, und die ausgepreßte mehrschichtige Folie wird auf einer oder mehreren Abzugswalzen bei einer Temperatur von 10 bis 100 °C, vorzugsweise 20 bis 50°C, abgezogen, wobei sie abkühlt und sich verfestigt.

Die so erhaltene Vorfolie wird dann längs und quer zur Extrusionsrichtung gestreckt, was zu einer Orientierung der Molekülketten führt. Das Längsstrecken wird man zweckmäßigerweise mit Hilfe zweier entsprechend dem angestrebten Streckverhältnis verschieden schnell laufender Walzen durchführen, wobei die Streckung bei einer Temperatur von 80 bis 150°C und mit einem Streckverhältnis im Bereich von 4 bis 8 vorzugsweise 5 bis 6 durchgeführt wird. Das Querstrecken erfolgt bei einer Temperatur von 120 bis 170°C mit Hilfe eines entsprechenden Kluppenrahmens, wobei die Querstreckverhältnisse im Bereich von 5 bis 10, vorzugsweise 7 bis 9 liegen.

An die biaxiale Streckung der Folie schließt sich ihre Thermofixierung (Wärmebehandlung) an, wobei die Folie etwa 0,1 bis 10 s lang bei einer Temperatur von 100 bis 160 C gehalten wird. Anschließend wird die Folie in üblicher Weise mit einer Aufwickeleinrichtung aufgewickelt.

Wie vorstehend beschrieben ist es erfindungswesentlich die Folie auf der Oberfläche der matten Deckschicht nach der biaxialen Streckung nach einer der bekannten Methoden mittels Corona zu behandeln. Die Oberflächenspannung liegt im allgemeinen im Bereich von 35 bis 50 mN/m, besonders bevorzugt zwischen 37 bis 45 mN/m. Die Folie kann gegebenenfalls zusätzlich auf der gegenüberliegenden Oberfläche mittels Corona, Flamme oder Plasma behandelt werden

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 5 bis 20 kV und 5 bis 30 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Die Releasefolie kann entweder direkt auf der Oberfläche der inneren Deckschicht bedruckt und mit einem Kaltsiegelkleber beschichtet werden oder die Releasefolie wird nach einem der nachfolgend beschriebenen Verfahren zu dem erfindungsgemäßen Laminat und der entsprechenden Verpackung aus dem Laminat weiterverarbeitet.

Zur Herstellung des Laminats wird eine ein- oder beidseitig vorbehandelte Basisfolie ausgewählt und vorzugsweise auf einer oder der druckvorbehandelten Seite mit handelsüblichen Druckfarben bedruckt. Anschließend wird auf diese bedruckte Seite beispielsweise mit Hilfe handelsüblicher Laminierkleber die Releasefolie mit ihrer Innenseite gegen die Basisfolie laminiert. Abschließend erfolgt der Auftrag des Kaltsiegelklebers auf der zweiten äußeren Oberfläche der Basisfolie. Je nach Art des Kaltsiegelklebers kann auch diese zweite Oberfläche der Basisfolie vorbehandelt sein. Dies richtet sich nach den Verarbeitungsvorschriften für den Kaltsiegelkleber. Das bedruckte und mit Kaltsiegelkleber beschichtete Laminat wird zur Rolle aufgewickelt und anschließend zur Verpackung weiterverarbeitet.

Grundsätzlich kommt auch das sogenannte Konterdruck-Verfahren in Betracht, bei welchem nicht die Basisfolie, sondern die erfindungsgemäße Releasefolie mittels sogenanntem Konterdruck auf ihrer Innenseite bedruckt wird. Ansonsten wird hinsichtlich des Laminierverfahrens und des Kaltsiegelauftrags analog wie oben beschrieben verfahren.

Als Basisfolien kommen je nach Anwendungszweck verschiedene Folien in Betracht. So eignen sich als Basisfolie sowohl transparente, metallisierte, weiß eingefärbte oder opake biaxial orientierte Polypropylenfolien gleichermaßen wie auch biaxial orientierte Polyethylenterephthalat-Folien, Polyethylenfolien und auch Polypropylen-Gießfolien, die je nach dem einzusetzenden Kaltsiegelkleber beidseitig oder nur auf der zu bedruckenden Seite einseitig vorbehandelt sind. Die Verwendung der erfindungsgemäßen Releasefolie ist nicht auf die genannten Basisfolientypen beschränkt. Die erfindungsgemäße Releasefolie kann überall dort vorteilhaft eingesetzt werden, wo eine Basis- oder Trägerfolie auf der Außenseite mit einem Kaltsiegelkleber versehen wird, welcher beim Aufwickeln eine starke Haftung zu einer gegenüberliegenden Oberfläche entwickelt. Im allgemeinen sind transparente Basisfolie bevorzugt.

Die Basisfolie kann mit einer Vielzahl unterschiedlicher Farbsysteme nach den unterschiedlichsten Verfahren bedruckt werden. So eigenen sich sowohl Ein- wie Zwei-Komponenten-Systeme. Zu den Ein-Komponenten-Farbsystemen gehören solche auf Basis Polyvinylbutyral, Nitrocellulose und Celluloseacetatpropionat, zu den Zwei-Komponenten-Farbsystemen solche auf Basis Epoxyharzen und Polyurethanharzen. Dabei kann der Einsatz von Primern oder Haftvermittlern zur Verbesserung der Farbhaftung von Vorteil sein.

Die Laminierung der Basisfolie mit der erfindungsgemäßen Releasefolie kann sowohl mit lösemittelhaltigen wie auch mit lösemittelfreien Laminierklebern erfolgen. Ferner kommt die sogenannte Extrusions-Laminierung in Betracht. Bei diesem Verfahren werden Basis- und Releasefolie nach dem Druckvorgang miteinander verbunden in dem zwischen die zu laminierenden Folien ein geeigneter, niedrig schmelzender thermoplastischer Kunststoff in einer dünnen Schicht extrudiert wird und die beiden Folien mit der dazwischenliegenden Kunststoffschmelze fest aufeinander gepreßt werden. Beim Erstarren des thermoplastischen Kunststoffs werden die beiden Folien miteinander fest verbunden. Das Verfahren der Extrusionslaminierung ist im Stand der Technik an sich bekannt. Vorzugsweise werden Polyethylene in der Extrusionslaminierung als Kunststoffschmelze eingesetzt.

Als Kaltsiegelkleber kommen eine große Zahl von marktgängigen Kaltsiegelklebern in Betracht. Solche Kaltsiegelkleber können auf Basis von Naturlatizes, wie auch auf Basis von synthetischen Latizes oder durch Kombination natürlicher und synthetischer Latizes hergestellt werden, die sich bezüglich der eingesetzten Suspensionsmittel, der vorgeschriebenen Verarbeitungsbedingungen, der Lagerstabilität, der Verankerung auf der Trägerfolie und der Siegelnahtfestigkeiten sowie durch die für die Siegelung erforderlichen Siegeldrücke und -temperaturen unterscheiden. Geeignet sind unter anderen die Kaltsiegelkleber der Firmen Henkel, Sun Chemicals, Eukalin, Swale und ähnliche. Der Einsatz und die vorteilhafte Releasewirkung der erfindungsgemäßen Folie ist jedoch keineswegs auf die angegebenen Kaltsiegelkleber beschränkt.

Grundsätzlich können die verschiedenen Verarbeitungsschritte zur Herstellung des erfindungsgemäßen Laminats in getrennten Arbeitsgängen durchgeführt werden. So kann z.B. die Herstellung des Verbundes unabhängig von der Bedruckung wie auch unabhängig von dem Auftrag des Kaltsiegelklebers erfolgen. Bevorzugt werden jedoch Verfahren, in denen möglichst mehrere oder alle der genannten Schritte in einem Arbeitsgang ausgeführt werden können. In jedem Fall ist es erforderlich, den Kaltsiegelkleber erst nach der Laminierung zum Verbund aufzutragen, um ein Verblocken der bedruckten und beschichteten Basisfolie zu vermeiden.

Zur Charakterisierung der Rohstoffe und der Folien wurden die folgenden Meßmethoden benutzt:

### Schmelzflußindex

Der Schmelzflußindex der Propylenpolymeren wird nach DIN EN ISO 1133 bei 2,16 kg Belastung und 230 °C gemessen. Der Schmelzflußindex der Polyethylene wird bei 21,6 kg und 190°C gemessen.

### Schmelzpunkt

DSC-Messung, Maximum der Schmelzkurve, Aufheizgeschwindigkeit 20 °C/min.

### Oberflächenspannung

Die Oberflächenspannung wurde mittels der sogenannten Tintenmethode (DIN ISO 8296) bestimmt.

### Messung des Blockverhaltens/Releaseigenschaften

Aus den nach Beispiel 5 hergestellten Laminaten mit Kaltsiegelkleberbeschichtung werden rechteckige Muster zugeschnitten. Folienlagen dieser Muster werden so aufeinander gestapelt, daß jeweils die Oberfläche mit der Kaltsiegelkleberbeschichtung und die äußere Release-Seite miteinander in Kontakt stehen. Um die ggf. miteinander verblockenden Folienmuster in die Zugprüfmachine einspannen zu können, wird jeweils ein wenige Zentimeter breiter Streifen am Rande der Probe abgedeckt, z.B. mit einem Papier. Zusätzlich wird jede zweite Kontaktfläche komplett abgedeckt, um jeweils zwei aufeinander liegende Folienmuster zwecks Messung vereinzeln zu können.

Der Stapel aus den einzelnen Folienlagen wird mittels einer Kipphebelpresse unter einem Druck von 100 N/cm² bei Zimmertemperatur 24 Std gepreßt, um die Bedingungen in einem Wickel zu simulieren. Danach werden die Folienproben aus jeweils zwei Mustern vereinzelt, in 30mm breite Streifen geschnitten und so in einer Zugprüfmaschine (z.B. Zwick) eingespannt, daß die Releasefolie und die mit Kaltsiegelkeber beschichtete Basisfolie unter einem Winkel von zweimal 90° voneinander getrennt werden. Dabei wird die Kraft gemessen, die zur Trennung der Folienlagen benötigt wird. Der Mittelwert aus drei Messungen sowie das Ausmaß des ggf. eintretenden Übertrags von Kaltsiegelkleber auf die Releasefolie wird zur Bewertung herangezogen.

### Messung der Verankerung des Kaltsiegelklebers

Eine Probe der Releasefolie wird auf der Innenseite bedruckt und/oder mit einer bedruckten Basisfolie laminiert, anschließend wird die bedruckte Innenseite oder die Basisfolie des Verbundes gemäß den Verarbeitungsvorschriften mit Kaltsiegelkleber beschichtet und ggf. getrocknet und durch Lagerung reifen gelassen. Anschließend wird der Kaltsiegelkleber unter gleichmäßigem Druck mit einem Klebeband (z.B. Tesa oder Lithographie Größe 25mm Breite) in Kontakt gebracht, sodann das Klebeband und die Folienprobe, die auf ihre Release-Eigenschaften hin untersucht werden soll, in eine Zugprüfmaschine (z.B. Zwick, Materialprüfungsgerät Typ 1120,25) eingespannt, so daß dieselben unter einem Winkel von zweimal 90° voneinander getrennt werden. Dabei wird die Kraft gemessen, die zur Trennung von Klebeband und Verbund benötigt wird. Der Mittelwert aus drei Messungen sowie das Ausmaß des ggf. eintretenden Übertrags von Kaltsiegelkleber auf das Klebeband werden zur Bewertung herangezogen.

### Messung der Siegelnahtfestigkeit des Kaltsiegelklebers

Die Siegelnahtfestigkeit des Kaltsiegelklebers wird an den nach Beispiel 5 hergestellten Laminaten geprüft. Hierbei werden die mit Kaltsiegelkleber bedeckten Folienoberflächen (bis auf einen wenige Zentimeter breiten Streifen zum Einspannen in die Prüfmaschine) bei den vom Hersteller angegebenen Temperaturen (im allgemeinen Raumtemperatur) unter 10 N/cm² Druck miteinander in Kontakt gebracht und verschweißt. Die verschweißten Proben werden in 15 mm breite Streifen geschnitten und mittels der unverschweißten Enden in eine Zugprüfmaschine (z.B. Zwick, Materialprüfungsgerät Typ 1120,25) eingespannt, so daß die beiden Lagen unter einem Winkel von zweimal 90° voneinander getrennt werden. Dabei wird die Kraft gemessen, die zur Trennung der beiden verschweißten Lagen benötigt wird. Der Mittelwert aus drei Messungen wird zur Bewertung herangezogen.

### Molekulargewichtsbestimmung

Die mittleren Molmassen Mw und Mn und die mittlere Molmassen-Dispersität Mw/Mn wurden in Anlehnung an DIN 55 672, Teil 1, mittels Gelpermeationschromatographie bestimmt. Anstelle von THF wurde als Elutionsmittel Orthodichlorbenzol verwendet. Da die zu untersuchenden olefinischen Polymeren bei Raumtemperatur nicht löslich sind, wird die gesamte Messung bei erhöhter Temperatur (135 °C) durchgeführt.

### Viskosität

Die Viskosität wird mittels eines Rotationsviskosimetern nach DIN 53019 gemessen.

### Beispiel 1

Durch Coextrusion und anschließende stufenweise Orientierung in Längs- und Querrichtung wurde eine transparente dreischichtige Folie bestehend aus der Basisschicht B und einer inneren und einer äußeren Deckschichten mit einer Gesamtdicke von 20 µm hergestellt. Die äußere matte Deckschicht hatte eine Dicke von ca. 2µm, die innere Deckschicht hatte eine Dicke von ca. 0,6 µm.

| | |
|---|---|
| B Basisschicht | |
| ∼99,88 Gew.-% | Propylenhomopolymer mit einem Schmelzpunkt von 165 °C und einem Schmelzflußindex von 3,4 g/10min, einem n-heptanunlöslicher Anteil von 94 % |
| ~0,12 Gew.-% | N,N-bis-ethoxyalkylamin (Antistatikum) |
| äußere Deckschicht: (Releaseschicht) | |
| ∼60 Gew.-% | Propylenhomopolymer mit einem Schmelzpunkt von 165 °C und einem Schmelzflußindex von 7,6 g/10min und einem n-heptanunlöslicher Anteil von 94 % |
| ∼38,5 Gew.-% | MDPE mit einem MFI von 14,4 g/10min (21,6 kg und 190°C); Dichte von 0,937g/ccm3 und einem Schmelzpunkt von 126°C |
| 1,5 Gew.-% | Polydimethylsiloxan mit einer Viskosität von 300.000 mm²/s. |
| 0,33 Gew.-% | SiO₂ als Antiblockmittel mit einer mittleren Teilchengröße von 5 µm |
| Innere Deckschicht: | |
| 99,9 Gew.-% | statistische Ethylen-Propylen-Butylen-Terpolymer mit einem Ethylengehalt von 3 Gew.-% und einem Butylengehalt von 7 Gew.-% (Rest Propylen) und einem Schmelzflußindex von 7,3 g/10min |
| 0,1 Gew.-% | SiO₂ als Antiblockmittel mit einer mittleren Teilchengröße von 5 µm |

Alle Schichten enthielten zusätzlich Neutralisationsmittel und Stabilisator in den üblichen geringen Mengen.

Die Herstellungsbedingungen in den einzelnen Verfahrensschritten waren:

| | | | |
|---|---|---|---|
| Extrusion: | Temperaturen | Basisschicht: | 250 °C |
| | | Deckschichten: | 250 °C |
| | Temperatur der Abzugswalze: | | 20 °C |
| Längsstreckung: | Temperatur: | | 110 °C |
| | Längsstreckverhältnis: | | 5,5 |
| Querstreckung: | Temperatur: | | 170 °C |
| | Querstreckverhältnis: | | 9 |
| Fixierung: | Temperatur: | | 150 °C |
| | Konvergenz: | | 10% |

Die Folie wurde auf der Oberfläche der äußeren Deckschicht mittels Corona oberflächenbehandelt. Die Oberflächenspannung betrug nach dieser Behandlung 42 mN/m. Die Rauheit Rz betrug auf der Oberfläche der matten Deckschicht 3,0µm.

### Beispiel 2:

Es wurde eine Folie nach Beispiel 1 hergestellt. Im Unterschied zu Beispiel 1 wurde statt Propylenhomopolymer ein Ethylen-Propylen-Copolymer mit einem Ethylen-Anteil von 4 Gew.-% (bezogen auf das Copolymer) und einem Schmelzpunkt von 135°C; und einem Schmelzflußindex von 7,3g/10 min bei 230 °C und 2,16 kg Belastung (DIN EN ISO 1133) in der matten Deckschicht eingesetzt. Die übrige Zusammensetzung und die Verfahrensbedingungen, sowie die Coronabehandlung bei der Herstellung der Folie wurden nicht verändert. Die Folie hatte jetzt eine Rauheit Rz auf der Oberfläche der matten Deckschicht von 3,3µm.

### Beispiel 3

Es wurde eine Folie nach Beispiel 1 hergestellt. Im Unterschied zu Beispiel 1 wurde die Folie zusätzlich auf der Oberfläche der inneren Deckschicht mittels Flamme behandelt. Die übrige Zusammensetzung und die Verfahrensbedingungen, sowie die Coronabehandlung bei der Herstellung der Folie wurden nicht verändert.

### Beispiel 4

Es wurde eine Folie nach Beispiel 1 hergestellt. Im Unterschied zu Beispiel 1 wurde eine symmetrische Folie hergestellt. Die innere Deckschicht hatte jetzt die gleiche Zusammensetzung die äußere Releaseschicht nach Beispiel 1. Die übrige Zusammensetzung und die Verfahrensbedingungen, sowie die Coronabehandlung bei der Herstellung der Folie wurden nicht verändert.

### Vergleichsbeispiel 1

Es wurde eine Folie nach Beispiel 1 hergestellt. Im Unterschied zu Beispiel 1 wurde die Oberfläche der matten Deckschicht keiner Oberflächenbehandlung unterworfen. Die übrige Zusammensetzung und die Verfahrensbedingungen bei der Herstellung der Folie wurden nicht verändert.

### Vergleichsbeispiel 2

Es wurde eine Folie nach Beispiel 1 hergestellt. Im Unterschied zu Beispiel 1 enthielt die Oberfläche der matten Deckschicht kein Polydimethylsiloxan. Die übrige Zusammensetzung und die Verfahrensbedingungen bei der Herstellung der Folie wurden nicht verändert.

### Vergleichsbeispiel 3

Es wurde eine Folie wie in Beispiel 1 beschrieben hergestellt. Im Unterschied zu Beispiel 1 wurde anstelle des Polydimethylsiloxan mit einer Viskosität von 300.000 mm²/s ein Polydimethylsiloxan mit einer Viskosität von 30.000 mm²/s in der gleichen Menge eingesetzt. Die übrige Zusammensetzung und die Verfahrensbedingungen bei der Herstellung der Folie wurden nicht verändert.

### Vergleichsbeispiel 4

Es wurde eine Folie wie in Beispiel 1 beschrieben hergestellt. Im Unterschied zu Beispiel 1 wurde (wie in VB3) anstelle des Polydimethylsiloxan mit einer Viskosität von 300.000 mm²/s ein Polydimethylsiloxan mit einer Viskosität von 30.000 mm²/s in der gleichen Menge eingesetzt. Zusätzlich wurde die Oberfläche der matten Deckschicht keiner Oberflächenbehandlung unterworfen (wie in VB1). Die übrige Zusammensetzung und die Verfahrensbedingungen bei der Herstellung der Folie wurden nicht verändert.

### Vergleichsbeispiel 5

Es wurde eine Folie wie in Beispiel 1 beschrieben hergestellt. Im Unterschied zu Beispiel 1 wurde anstelle des Polydimethylsiloxan mit einer Viskosität von 300.000 mm²/s ein Polydimethylsiloxan mit einer Viskosität von 30.000 mm²/s in der gleichen Menge eingesetzt. Zusätzlich wurde das MDPE in der äußeren Deckschicht durch Propylenhomopolymer ersetzt, so daß die diese Deckschicht jetzt ca. 98 Gew.-% des angegebenen Propylenhompolymer enthielt. Die übrige Zusammensetzung und die Verfahrensbedingungen bei der Herstellung der Folie wurden nicht verändert.

### Beispiel 5 Laminatherstellung

Die Folien nach den Beispielen und den Vergleichsbeispielen wurden nach ihrer Herstellung als Releasefolie mit einer weiß opaken Basisfolie zu einem Folienverbund verarbeitet. Als Basisfolie wurde Treofan SHD eingesetzt. Dies ist eine vierschichtige weiß-opake boPP Folie mit CaCO3 und TiO2 in der Basisschicht und einer Zwischenschicht aus Propylenhomopolymer auf der Glanzseite. Die Basisfolie SHD war einseitig druckvorbehandelt und auf ihrer glänzenden Oberfläche vollflächig bedruckt. Nach dem Auftrag eines lösemittelfreien Zwei-Komponenten-PU-Klebers auf die Druckfarbe wurde diese Basisfolie mit ihrer bedruckten Innenseite gegen die Innenseite der Releasefolien nach den Beispielen 1 bis 4 und den Vergleichsbeispielen 1 und 5 laminiert. Der jeweils so hergestellte Folienverbund wurde auf der Oberfläche, welche der äußeren Matt-Schicht der Releasefolie gegenüberlag, vollflächig mit zwei verschiedenen Kaltsiegelklebern (wie in der unten stehenden Tabelle angegeben) beschichtet. Die beschichteten Verbundfolien wurde aufgerollt, bzw. entsprechende Zuschnitte zu Testzwecken gestapelt, so daß der Kaltsiegelkleber in Kontakt mit der matten Oberfläche der Release-Folie stand, und bis zur Ausprüfung gelagert. Die Prüfergebnisse sind in Tabelle 1 zusammengefaßt.

### Beispiel 6: Bedruckung von Beispiel 3

Die nach dem Beispiel 3 hergestellte Folie wurde auf der Oberfläche der inneren, flammbehandelten Deckschicht mittels Konterdruck bedruckt. Anschließend wurde auf diese bedruckte Seite ein Kaltsiegelkleber aufgetragen.

**Tabelle 1: Laminate gemäß Beispiel 5**

| **Release-Folie** | **PDMS Viskosität mm²/s** | **PDMS Gehalt äußere DS** | **matte DS Releasefolie** | **Corona mN/m** | **Glanz 60°** |
|---|---|---|---|---|---|
| **B1** | **300.000** | **1,5%** | **65% PP/35% PE** | **42** | **15** |
| **B2** | **300.000** | **1,5%** | **65% C2C3 Copo / 35% PE** | **42** | **15** |
| **B3** | **300.000** | **1,5%** | **65% PP / 35% PE** | **42*** | **15** |
| **B4** | **300.000** | **1,5%** | **65% PP / 35% PE (beidseitig)** | **42** | **15** |
| **VB1** | **300.000** | **1,5%** | **65% PP / 35% PE** | **keine Corona** | **15** |
| **VB2** | **/** | **/** | **65% PP / 35% PE** | **42** | **16** |
| **VB3** | **30.000** | **1,5%** | **65% PP / 35% PE** | **42** | **14** |
| **VB4** | **30.000** | **1,5%** | **65% PP / 35% PE** | **keine Corona** | **14** |
| **VB5** | **30.000** | **1,5%** | **98% PP** | **42** | **84** |
| * zusätzliche Flammbehandlung auf der inneren Oberfläche (44 mN/m) | | | | | |
| B = Beispiel; VB = Vergleichsbeispiel | | | | | |

**Tabelle 2 Kaltsiegelkleber Henkel 22-861**

| **Release-Folie** | **Siegelnahtfestigkeit Kaltsiege/lKaltsiegel N/15mm** | **Blockkraft Kaltsiegel- /Release N/30mm** | **Kaltsiegelübertrag auf Release Seite** |
|---|---|---|---|
| B1 | S = 2,3 | B = 0,9 | Kein Übertrag |
| B2 | S = 2,2 | B = 0,8 | Kein Übertrag |
| B3 | S = 2,2 | B = 0,9 | Kein Übertrag |
| B4 | S = 2,2 | B = 0,7 | Kein Übertrag |

| **Release-Folie** | **Siegelnahtfestigkeit Kaltsiege/lKaltsiegel N/15mm** | **Blockkraft Kaltsiegel-/Release N/30mm** | **Kaltsiegelübertrag auf Release Seite** |
|---|---|---|---|
| VB1 | S = 1,5 | B = 2,5 | Stellenweise Übertrag |
| VB2 | S = 2,4 | B = 2,5 | Stellenweise Übertrag |
| VB3 | S = 1,8 | B = 1,4 | Geringer Übertragung |
| VB4 | S = 1,6 | B = 2,8 | Starker Übertrag |
| VB5 | S = 1,6 | B = 0,5 | Kein Übertrag |

**Tabelle 3 Kaltsiegelkleber Sun Chemicals S 8078**

| **Release-Folie** | **Siegelnahtfestigkeit KaltsiegelIKaltsiegel N/15mm** | **Blockkraft Kaltsiegel /Release-N/30mm** | **Kaltsiegelübertrag auf Release Seite** |
|---|---|---|---|
| B1 | S = 2,5 | B = 1,1 | Kein Übertrag |
| B2 | S = 2,5 | B = 0,9 | Kein Übertrag |
| B3 | S = 2,7 | B = 0,9 | Kein Übertrag |
| B4 | S = 2,6 | B = 0,8 | Kein Übertrag |
| VB1 | S = 1,7 | B = 3,2 | Starker Übertrag |
| VB2 | S = 2,4 | B = 3,7 | Vollständiger Übertrag |
| VB3 | S = 1,9 | B = 2,0 | Stellenweise Übertrag |
| VB4 | S = 1,6 | B = 2,6 | Stellenweise Übertrag |
| VB5 | S = 1,8 | B = 0,6 | Kein Übertrag |

**Tabelle 4: Release-Folie, jeweils bedruckt auf der inneren Deckschicht im Konterdruckverfahren**

| **Beispiel Release -Folie I** | **Druckfarbe, Basis** | **Kratzfestigkeit** | | **Knitterfestigkeit** | | **Farbhaftung Tesa-Test** | |
|---|---|---|---|---|---|---|---|
| | | **sofort** | **nach 1 Tag** | **sofort** | **nach 1 Tag** | **sofort** | **nach 1 Tag** |
| B3 | Siegwerk NC 57, blau Nitrocellulose | 3 | 1 | 2 | 1 | 10 % | 0 % |
| B3 | Siegwerk VL 31, rot Polyvinylbutyral PVB | 2 | 1 | 2 | 1 | 5% | 0 % |
| B1, B2, B4, VB1 - VB5 sind wegen fehlender Druckvorbehandlung nicht für Konterdruck vorgesehen Bewertungsschlüssel Kratzfestigkeit, Knitterfestigkeit: | | | | | | | |
| 1 - nein, kein Farbabrieb | | | | | | | |
| 2 - kaum | | | | | | | |
| 3 - mäßig | | | | | | | |
| 4 - stark | | | | | | | |

## Patentansprüche

1. Transparente mehrschichtige biaxial orientierte Polyolefinfolie aus einer Basisschicht und mindestens einer äußeren matten Deckschicht, wobei die äußere Deckschicht mindestens zwei inkompatible Polymere enthält und eine Oberflächenrauheit von mindestens 2,0 µm bei einem cut off von 25 µm aufweist, **dadurch gekennzeichnet, dass** die äußere matte Deckschicht ein Polydialkylsiloxan enthält, welches eine Viskosität von 150.000 bis 400.000 mm²/s aufweist und die Oberfläche dieser äußeren matten Deckschicht mittels Corona oberflächenbehandelt ist und die Mischung aus inkompatiblen Polymeren ein Polyethylen und ein Propylenpolymeres enthält.

2. Folie nach Anspruch 1, **dadurch gekennzeichnet, dass** das Polyethylen ein HDPE oder ein MDPE ist und das Polypropylenpolymere ein Propylenco- oder Propylenterpolymer oder ein Propylenhomopolymer ist.

3. Folie nach Anspruch 1, **dadurch gekennzeichnet, dass** das Polyethylen ein HDPE oder ein MDPE ist und das Polypropylenpolymere ein Propylenco- und/oder Propylenterpolymer.

4. Folie nach Anspruch 1, **dadurch gekennzeichnet, dass** das die Oberflächenspannung der Oberfläche der äußeren Deckschicht nach der Coronabehandlung 37 bis 50 mN/m beträgt.

5. Folie nach einem oder mehreren der Ansprüche 1 bis 4, **dadurch gekennzeichnet, dass** die matte Deckschicht >0,5 Gew.-% Polydialkylsiloxan, bezogen auf das Gewicht der Deckschicht enthält.

6. Folie nach einem oder mehreren der Ansprüche 1 bis 5, **dadurch gekennzeichnet, dass** die matte Deckschicht zusätzlich Antiblockmittel, vorzugsweise vernetzte Silicone oder vernetzte Polymethylmethacrylat-Partikel, enthält.

7. Folie nach einem oder mehreren der Ansprüche 1 bis 6, **dadurch gekennzeichnet, dass** die matte Deckschicht eine Dicke von 1 bis 10 µm aufweist.

8. Laminat aus einer polyolefinischen Basisfolie, welche mittels Kaschierkleber oder mittels Extrusionslaminierung gegen eine Folie nach Anspruch 1 laminiert ist, **dadurch gekennzeichnet, dass** die Basisfolie mit ihrer inneren Oberfläche gegen die innere Oberfläche der Folie nach Anspruch 1 laminiert wird und auf die äußeren Oberfläche der Basisfolie einen Kaltsiegelkleber aufgebracht ist.

9. Laminat nach Anspruch 8, **dadurch gekennzeichnet, dass** die Basisfolie auf ihrer inneren Oberfläche bedruckt ist.

10. Laminat nach Anspruch 8 oder 9, **dadurch gekennzeichnet, dass** die Folie nach Anspruch 1 auf ihrer inneren Oberfläche mit einem Konterdruck versehen ist.

11. Folie nach Anspruch 1, **dadurch gekennzeichnet, dass** die Folie auf der inneren Oberfläche bedruckt und mit einem Kaltsiegelkleber versehen ist.

12. Verwendung eines Laminats nach Anspruch 8, 9 oder 10 oder einer Folie nach Anspruch 1 bis 7 zur Herstellung einer Verpackung, wobei die Außenseite der Folie nach Anspruch 1 die Außenseite der Verpackung bildet.

## Claims

1. A transparent, multilayer, biaxially oriented polyolefin film comprising a base layer and at least one matt outer cover layer, wherein the outer cover layer contains at least two incompatible polymers and has a surface roughness of at least 2.0 µm with a cut-off of 25 µm, **characterized in that** the matt outer cover layer contains a polydialkyl siloxane with a viscosity from 150,000 to 400,000 mm²/s and the surface of this matt outer cover layer has undergone corona surface treatment and the mixture of incompatible polymers contains a polyethylene and a propylene polymer.

2. The film according to claim 1, **characterized in that** the polyethylene is an HDPE or an MDPE, and the polypropylene polymer is a propylene copolymer or a propylene terpolymer or a propylene homopolymer.

3. The film according to claim 1, **characterized in that** the polyethylene is an HDPE or an MDPE, and the polypropylene polymer is a propylene copolymer and/or a propylene terpolymer.

4. The film according to claim 1, **characterized in that** the surface tension of the surface of the outer cover layer is 37 to 50 mN/m after the corona treatment.

5. The film according to any one or more of claims 1 to 4, **characterized in that** the matt cover layer contains >0.5% by weight polydialkyl siloxane relative to the weight of the cover layer.

6. The film according to any one or more of claims 1 to 5, **characterized in that** the matt cover layer also contains antiblocking agents, preferably crosslinked silicones or crosslinked polymethyl methacrylate particles.

7. The film according to any one or more of claims 1 to 6, **characterized in that** the matt cover layer has a thickness from 1 to 10 µm.

8. A laminate of a polyolefin base film that has been laminated with a film as described in claim 1 by means of laminating adhesive or extrusion lamination, **characterized in that** the inner surface of the base film is laminated with the inner surface of the film as described in claim 1 and a cold seal adhesive is applied to the outer surface of the base film.

9. The laminate according to claim 8, **characterized in that** the inner surface of the base film is printed.

10. The laminate according to claim 8 or 9, **characterized in that** the inner surface of the film as described in claim 1 is reverse printed.

11. The film according to claim 1, **characterized in that** the inner surface of the film is printed and furnished with a cold seal adhesive.

12. Use of a laminate according to claims 8, 9 or 10 or a film according to claims 1 to 7 for producing a packaging product, wherein the outer side of the film according to claim 1 forms the outer side of the packaging product.

## Revendications

1. Feuille transparente en polyoléfine, comportant plusieurs couches et présentant une orientation biaxiale, ladite feuille étant constituée d'une couche de base et d'au moins une couche de couverture extérieure mate, la couche de couverture extérieure contenant au moins deux polymères incompatibles et présentant une rugosité de surface supérieure ou égale à 2,0 µm lorsque la longueur d'onde limite (cut-off) est de 25 µm, **caractérisée en ce que** la couche de couverture extérieure mate contient un polydialkylsiloxane présentant une viscosité comprise entre 150.000 et 400.000 mm²/s et que la surface de cette couche de couverture extérieure mate a subi un traitement de surface de type corona et que le mélange de polymères incompatibles contient un polyéthylène et un polymère de propylène.

2. Feuille selon la revendication 1, **caractérisée en ce que** le polyéthylène est un PE-HD ou un PE-MD et que le polymère de polypropylène est un co- ou terpolymère de propylène ou un homopolymère de propylène.

3. Feuille selon la revendication 1, **caractérisée en ce que** le polyéthylène est un PE-HD ou un PE-MD et que le polymère de polypropylène est un co- et/ou terpolymère de propylène.

4. Feuille selon la revendication 1, **caractérisée en ce que**, suite au traitement corona, la tension superficielle de la surface de la couche de couverture extérieure est comprise entre 37 et 50 mM/m.

5. Feuille selon une ou plusieurs des revendications 1 à 4, **caractérisée en ce que** la couche de couverture mate contient 〉 0,5% en poids de polydialkylsiloxane, par rapport au poids de la couche de couverture.

6. Feuille selon une ou plusieurs des revendications 1 à 5, **caractérisée en ce que** la couche de couverture mate contient en outre des agents anti-adhérents, préférentiellement des silicones réticulés ou des particules de polyméthylméthacrylate réticulées.

7. Feuille en polyoléfine selon l'une des revendications 1 à 6, **caractérisée en ce que** la couche de couverture mate présente une épaisseur comprise entre 1 et 10 µm.

8. Matériau stratifié, constitué d'une feuille de base polyoléfinique laquelle est reliée à une feuille selon la revendication 1 en mettant en oeuvre un adhésif de contre-collage ou en procédé de extrusion-laminage pour ainsi réaliser un laminage, **caractérisé en ce que** la surface intérieure de la feuille de base est reliée par laminage à la surface intérieure de la feuille selon la revendication 1 et que l'on applique un adhésif de scellage à froid sur la surface extérieure de la feuille de base.

9. Matériau stratifié selon la revendication 8, **caractérisé en ce que** la surface intérieure de la feuille de base est pourvue d'un motif imprimé.

10. Matériau stratifié selon la revendication 8 ou 9, **caractérisé en ce que** la surface intérieure de la feuille selon la revendication 1 est pourvue d'un motif inversé qui est imprimé au verso.

11. Feuille selon la revendication 1, **caractérisée en ce que** la surface intérieure de ladite feuille est pourvue d'un motif imprimé et d'un adhésif de scellage à froid.

12. Utilisation d'un matériau stratifié selon les revendications 8, 9 ou 10, ou d'une feuille selon les revendication 1 à 7, pour fabriquer un emballage, la face extérieure de la feuille selon la revendication 1 formant la face extérieure dudit emballage.
